# EUROPÄISCHE PATENTANMELDUNG

(11) **EP 1 561 563 A1**
(43) Veröffentlichungstag der Anmeldung: **10.08.2005**
(21) Anmeldenummer: 05100469.5
(22) Anmeldetag: 25.01.2005
(51) Int. Cl.: B29C 45/17, B29C 45/16

(54) **Spritzgiessmaschine**

(30) Priorität: 06.02.2004 DE 102004006112
(71) Anmelder: Battenfeld GmbH, D-58540 Meinerzhagen (DE)
(72) Erfinder: Füller, Klaus, 19061 Schwerin (DE); Kassner, Ralf, 58566 Kierspe (DE); Raumann, Norbert, 19073 Wittenförden (DE)

(57) **Zusammenfassung**

Die Erfindung betrifft eine Spritzgießmaschine mit mindestens zwei unabhängigen Spritzeinheiten und mindestens einem Maschinenbett (8), wobei eine erste Spritzeinheit an einer ersten Formaufspannplatte (1) und die zweite Spritzeinheit an einer zweiten Formaufspannplatte (2) angeordnet ist, wobei mindestens eine Formaufspannplatte (1, 2) auf ein drehbares Mittelteil (3) zubewegbar ist.

Erfindungsgemäß ist vorgesehen, dass Versorgungsleitungen für das Mittelteil (3) über eine Brücke (7) zuführbar sind, wobei die Brücke (7) mit dem Mittelteil (3) und einem Turm (6) in Verbindung steht.

## Beschreibung

Die Erfindung betrifft eine Spritzgießmaschine mit mindestens zwei unabhängigen Spritzeinheiten und mindestens einem Maschinenbett, wobei eine erste Spritzeinheit an einer ersten Formaufspannplatte und die zweite Spritzeinheit an einer zweiten Formaufspannplatte angeordnet ist, wobei mindestens eine Formaufspannplatte auf ein drehbares Mittelteil zubewegbar ist.

Bekannte gattungsgemäße Spritzgießmaschinen weisen zwei Spritzeinheiten sowie ein drehbares Mittelteil auf, wobei sich das drehbare Mittelteil auf die Verbindungsholme zwischen den Spritzeinheiten abstützt. Während des Spritzgießprozesses ist das Mittelteil sowie eine Spritzeinheit auf eine zweite Spritzeinheit, die meist nicht verfahrbar ist, zubewegbar. Das verschiebbare, auf den Holmen gelagerte Mittelteil hat somit keine feste Verbindung zum Maschinenbett, auftretende Spritzdrükke können somit nur über die Lagerung oder über die auf der Gegenseite angeordnete Spritzeinheit im Maschinenbett aufgefangen werden.

Die Erfindung stellt sich daher die **Aufgabe**, eine Spritzgießmaschine mit drehbarem Mittelteil derart weiterzubilden, daß das Mittelteil bei angeschlossenen Versorgungsleitungen ungehindert drehen kann.

Die **Lösung** der Aufgabe ist in Verbindung mit dem Oberbegriff des Anspruches 1 dadurch gekennzeichnet, daß Versorgungsleitungen für das Mittelteil über eine Brücke zuführbar sind, wobei die Brücke mit dem Mittelteil und einem Turm in Verbindung steht. Dieses turmähnliche Gestell ist neben dem Mittelteil und neben der Spritzgießmaschine angeordnet. Der Turm und die Brücke sind für die Aufnahme von Versorgungsleitungen geeignet. Vorteilhafterweise sind an diesem turmähnlichen Gestell gleichzeitig Fahrzylinder für die Bewegung der Formaufspannplatten angeordnet. Über die Bücke ist die Energiezufuhr zum Mittelteil vom turmähnlichen Gestell realisierbar.

Das Mittelteil stützt sich am Maschinenbett ab und der Antrieb zum Drehen des Mittelteiles ist unterhalb diesem angeordnet. Die Versorgungsleitungen für das Mittelteil sind bevorzugt in einer Energieführungskette verlegt. Diese Energieführungskette weist eine Krümmungsachse auf, die um die gleiche geometrische Achse krümmbar ist, um die auch das Mittelteil schwenkt. Eine weitere Krümmungsachse der Energieführungskette ist auf die Schwenkachse des Mittelteils zu- oder von dieser wegbewegbar.

Es ist aber auch denkbar, die Energieführungskette nicht über die Brükke, sondern unterhalb des Mittelteils vom Grundgestell anzuordnen. Bei beiden Ausführungsarten ist die Zuführung der Versorgungsleitungen zum Mittelteil unabhängig davon möglich, ob das Mittelteil längsverschiebbar auf dem Grundgestell angeordnet ist oder nicht. Das Mittelteil ist somit drehbar auf einem Grundgestell gelagert, wobei das Drehlager wahlweise fest mit dem Grundgestell verankert oder auf diesem längsverschiebbar ist.

In den Zeichnungen ist schematisch ein Ausführungsbeispiel der Erfindung dargestellt.
- Fig. 1: zeigt eine Ansicht auf das Mittelteil,
- Fig. 2: eine Ansicht auf die gesamte Spritzgießmaschine mit einem fest mit dem Grundgestell verankerten Mittelteil
- Fig. 3: eine Draufsicht auf die Spritzgießmaschine gemäß Figur 2
- Fig. 4: eine Ansicht auf die gesamte Spritzgießmaschine mit einem auf dem Grundgestell längsverschiebbaren Mittelteil und
- Fig. 5: eine Draufsicht auf die Spritzgießmaschine gemäß Figur 4

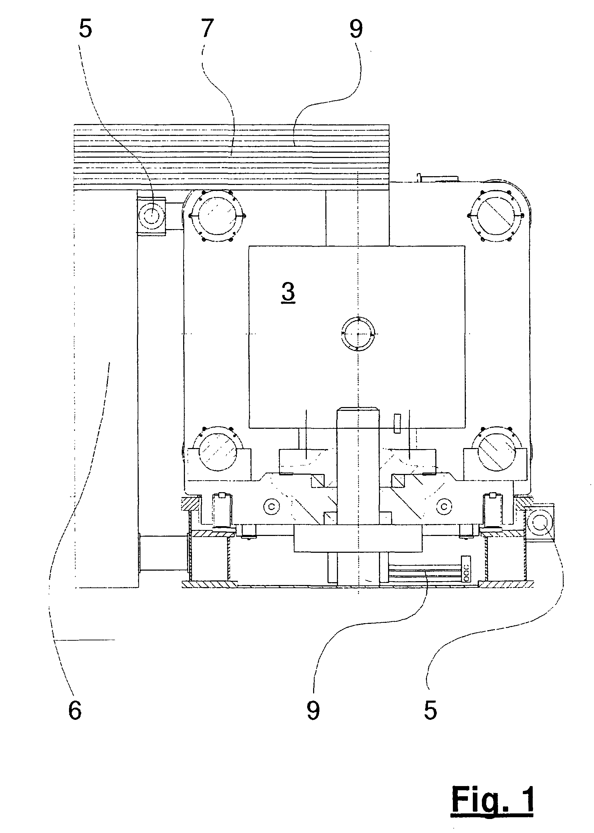

Figur 1 zeigt das Grundgestell oder Maschinengestell 8, auf dem sich das Mittelteil 3 abstützt. Der Antrieb für das Mittelteil ist zwischen dem Rahmengestell 8 und unter dem Mittelteil 3 angeordnet. Neben der Spritzgießmaschine auf Höhe des Mittelteils ist ein turmähnliches Gestell 6, welches als Turm unter Bezug genommen wird, angeordnet. Das Mittelteil 3 sowie der Turm 6 sind über eine Brücke 7 verbunden. Die Brücke 7 wird hier über eine Energieführungskette 9 gebildet, die die Aufnahme der Wasserzuführung sowie Öl- und Stromversorgung bildet. Im Eckbereich des Überganges des Turmes 6 und der Brücke 7 ist eine Aufnahme angeordnet, die zur Befestigung des oberen der diagonal angeordneten Fahrzylinder 5 vorgesehen ist. Als Weiterbildung oder als Alternative ist die Energieführungskette 9 auch unterhalb des Mittelteils 3 anbringbar, sie läuft dann quasi parallel zur Laufrichtung der beweglichen Formaufspannplatten.

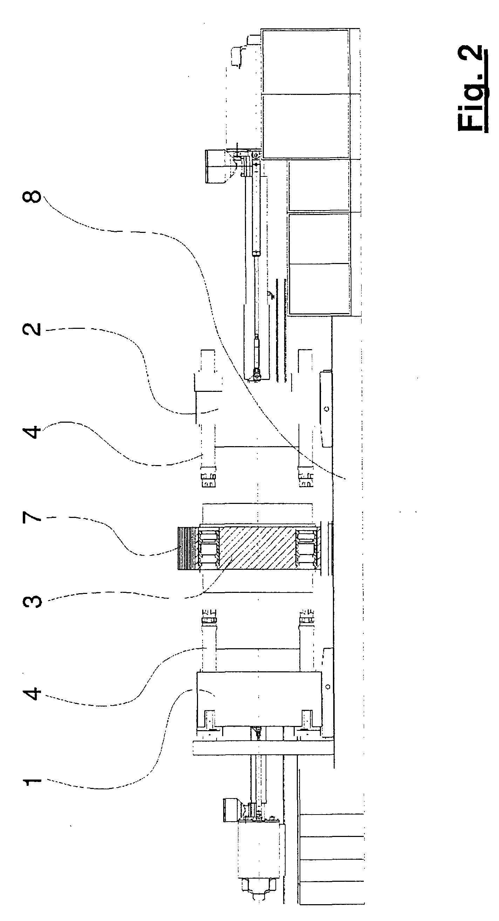

Figur 2 zeigt die Spritzgießmaschine in einer Seitendarstellung, wobei wiederum das Maschinenbett 8 dargestellt ist, auf dem die beiden fahrbaren Formaufspannplatten 1 und 2 sowie das Mittelteil 3 abgestützt sind. Die Formaufspannplatten 1 und 2 sind im Mittelteil 3 mittels Holme 4 verankerbar. Über dem Mittelteil 3 ist die Brücke 7 angeordnet, die mit dem nicht in dieser Darstellung ersichtlichen Turm verbunden ist.

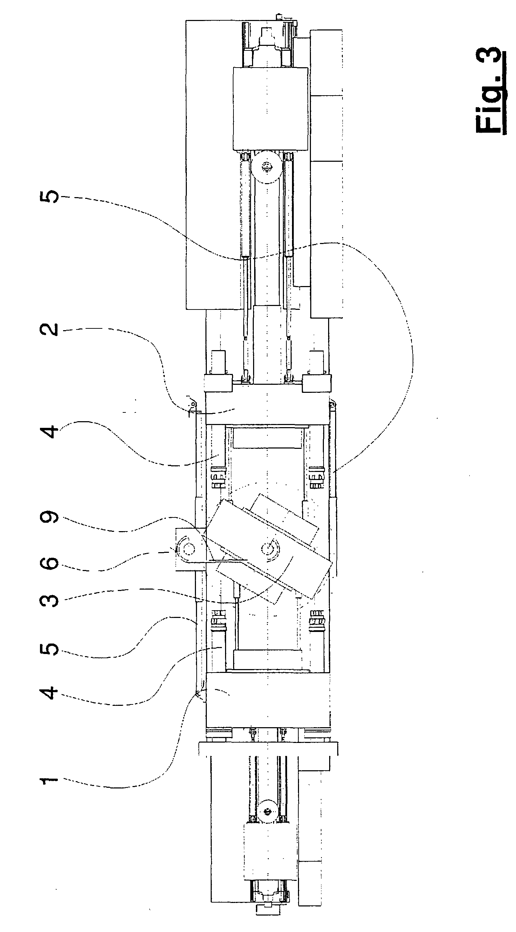

Aus der Figur 3 geht eine Draufsicht der erfindungsgemäßen Spritzgießmaschine hervor. Sie zeigt die beiden beweglichen Formaufspannplatten 1 und 2, die über die Holme 4 mit dem Mittelteil verankerbar sind. In dieser Darstellung ist das Mittelteil um etwa 30° geschwenkt und die Versorgungsleitungen werden über die Energieführungskette 9 vom Turm 6 zum Mittelteil geleitet. Die Fahrzylinder 5 zum Bewegen der Formaufspannplatten 1 und 2 sind neben der Spritzgießmaschine am Turm 6 angebracht.

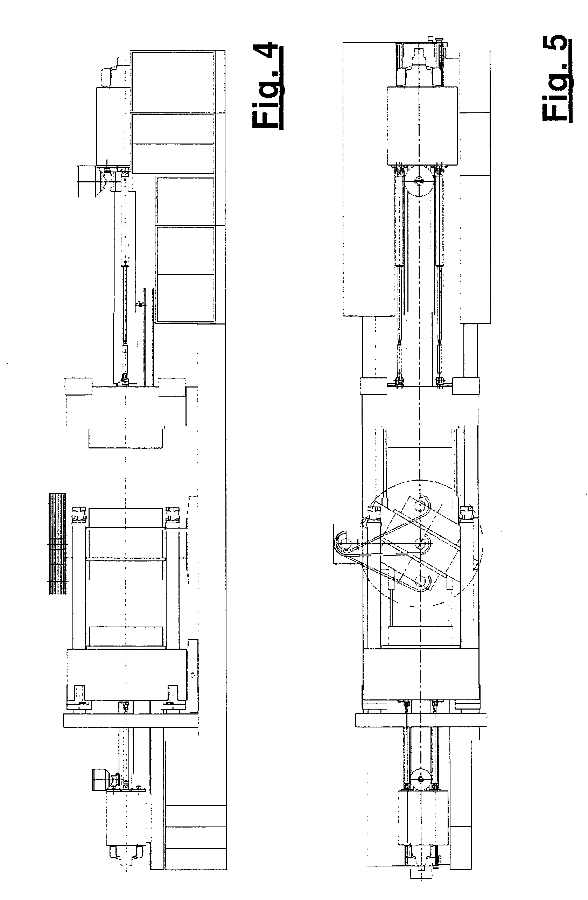

Die Figuren 4 und 5 zeigen eine Ausführungsform der Erfindung bei einem auf dem Grundgestell bzw. Maschinenbett längsverschiebbaren Mittelteil. Hier wird deutlich, dass die Energieführungskette 9 auch diese Längsbewegung nach rechts bzw. links problemlos mitmacht.

Damit die Versorgungsleitungen die Schwenkbewegung des Turmes unbeschadet mitvollziehen können, werden sie bei Mittelteilen, die reversibel um die Drehachse jeweils nur um 180° geschwenkt werden, vorzugsweise in einer an sich bekannten Energieführungskette 9 mit ausreichend großem Krümmungsradius bzw. Krümmungsradien verlegt, wodurch auf die an dieser Stelle sonst übliche Drehdurchführung mit den bekannten Leckageproblemen (Wasser, Öl) bzw. Kontaktproblemen (Elektroenergie) durch Verschleiß verzichtet werden kann.

Die Energieführungskette 9 ist so angeordnet, daß sie sich um die gleiche geometrische Achse krümmt, um die das Mittelteil schwenkt.

Die geometrische Achse eines weiteren Krümmungsradius der Energieführungskette 9 bewegt sich beim Schwenken des Mittelteils auf dessen Schwenkachse zu oder von dieser weg.

### Bezugszeichenliste:

- 1: erste bewegliche Formaufspannplatte
- 2: zweite bewegliche Formaufspannplatte
- 3: Mittelteil
- 4: Holm
- 5: Fahrzylinder
- 6: Turm
- 7: Brücke
- 8: Maschinenbett
- 9: Energieführungskette

## Patentansprüche

1. Spritzgießmaschine mit mindestens zwei unabhängigen Spritzeinheiten und mindestens einem Maschinenbett (8),
wobei eine erste Spritzeinheit an einer ersten Formaufspannplatte (1) und
die zweite Spritzeinheit an einer zweiten Formaufspannplatte (2) angeordnet ist,
wobei mindestens eine Formaufspannplatte (1, 2) auf ein drehbares Mittelteil (3) zubewegbar ist,
**dadurch gekennzeichnet, dass**
Versorgungsleitungen für das Mittelteil (3) über eine Brücke (7) zuführbar sind,
wobei die Brücke (7) mit dem Mittelteil (3) und einem Turm (6) in Verbindung steht.

2. Spritzgießmaschine nach Anspruch 1, **dadurch gekennzeichnet, dass** der Turm (6) neben dem Mittelteil (3) und der Spritzgießmaschine angeordnet ist.

3. Spritzgießmaschine nach Anspruch 2, **dadurch gekennzeichnet, dass** der Turm (6) und die Brücke für die Aufnahme von Versorgungsleitungen geeignet ist.

4. Spritzgießmaschine nach Anspruch 2 oder 3, **dadurch gekennzeichnet, dass** am Turm (6) neben der Spritzgießmaschine Fahrzylinder (5) angeordnet sind.

5. Spritzgießmaschine nach einem der Ansprüche 1 bis 4, **dadurch gekennzeichnet, dass** das Mittelteil (3) am Maschinenbett abgestützt ist.

6. Spritzgießmaschine nach einem der vorigen Ansprüche, **dadurch gekennzeichnet, dass** ein Antrieb (9) zum Drehen des Mittelteils (3) unterhalb des Mittelteils (3) angeordnet ist.

7. Spritzgießmaschine nach einem der vorigen Ansprüche, **dadurch gekennzeichnet, dass** die Versorgungsleitungen in einer Energieführungskette 9 verlegt sind.

8. Spritzgießmaschine nach Anspruch 7, **dadurch gekennzeichnet, dass** die Energieführungskette 9 eine Krümmungsachse aufweist, die um die gleiche geometrische Achse krümmbar ist, um die das Mittelteil (3) schwenkt.

9. Spritzgießmaschine nach Anspruch 8, **dadurch gekennzeichnet, dass** eine weitere Krümmungsachse der Energieführungskette 9 auf die Schwenkachse des Mittelteils (3) zu- oder von dieser wegbewegbar ist.
